# EUROPEAN PATENT SPECIFICATION

(11) **EP 2 905 547 B1**
(45) Date of publication and mention of the grant of the patent: **05.12.2018**
(21) Application number: 15154103.4
(22) Date of filing: 06.02.2015
(51) Int. Cl.: F24D 3/12, F24F 5/00

(54) **SYSTEM FOR HEATING OR COOLING WITH A TRANSFER FLUID, OF THE UNDERFLOOR TYPE**
FUSSBODENSYSTEM ZUR ERWÄRMUNG ODER KÜHLUNG MIT ÜBERTRAGUNGSFLUID
SYSTÈME DE CHAUFFAGE OU DE REFROIDISSEMENT AVEC UN FLUIDE DE TRANSFERT, DU TYPE SOUS PLANCHER

(30) Priority: 07.02.2014 IT MI20140176
(43) Date of publication of application: 12.08.2015
(73) Proprietor: Cristalli, Giovanni, Dubai (AE)
(72) Inventor: Cristalli, Giovanni, Dubai (AE); Mutti, Renato, 29027 Podenzano PC (IT)
(74) Representative: Dalla Rosa, Adriano

(56) References cited:
- EP-A1- 1 731 845
- WO-A1-2006/091004
- DE-A1-102009 025 920
- GB-A- 2 454 079

## Description

The present invention relates to a system for heating or cooling with a transfer fluid, of the underfloor type, particularly adapted for outdoor environments.

From DE102009025920A1 is known a planar module comprising a plate-like body in which the length and width is formed to form a main surface very much greater than that of the other longitudinal extent of the end faces of corresponding thickness, and in which body at least one duct is formed for passage of a fluid which extends along the main surface, the area module having at least one end connecting means for positively and/or not positively connection with a further module surface. There is also provided a system with several surface modules which can be connected together to a heating or cooling surface, as well as the use of space modules for forming heating and / or cooling surfaces on walls, ceilings or floors of buildings, in particular for preparing floor heating systems in old buildings taking advantage of existing connections of hot water radiators.

From GB2454079A is known a structural floor panel of a building comprising a top panel and a base panel with a hollow space between them, an inlet and an outlet connection on the floor panel and through which a flow of heat exchange medium flows and communicates through the hollow space. The inlet and outlet may have self-sealing valves connected to a water flow and return pipes . The panel may be supported by pedestals, which may incorporate the valves. A plurality of dome shaped integral strengthening projections may extend from the base towards the top and may be welded to the top. A heat reflecting layer may be applied over the face of the base to reflect back heat. A ceramic heat conducting means may be applied to the upper surface of the panel to act as a heat sink to store heat and assist in heat transfer to a room. The panel may be inverted so that a dimpled side is uppermost for enhanced heat transfer to the room. A plurality of floor panels may be provided.

From WO2006091004A1 is known a heat medium circulating type heat sheet, by which the heat regenerative material is heated by circulating the received heat medium from the heat source, for alleviate the conventional heat sheet as installed the tube in internal of that sheet for circulating the heat medium, the duct part is posed in between the upper sheet and the lower sheet as had the duct on upside of that lower sheet, after that, the upper sheet is attached on the lower sheet by fusion. In that way, the duct is formed in internal of the main body as designed regular vertical section and high density interval pattern for circulating the heat medium, so that, the heat medium is smoothly flowed and the heat is more evenly distributed, meanwhile, the production procedure is simplified by above the procedure than the conventional tube type heat sheet, therefore, the expense is decreased and the production efficiency is epochally heightened, and so on.

From EP1731845A1 is known an improved heat exchanger for space heating and cooling having a resin construction with an insert layer between outer sealing panels and with the insert including a fluid distribution pattern of ridges and grooves and with inlet and outlet connections. The heat exchanger components are of epoxy, polyurethane or polyester resin bonded together into a watertight module which has a minimum oxygen permeability.

The object of the present invention is to realize a system for heating or cooling with a transfer fluid, of the underfloor type, which is made in a manner different than that disclosed by the state of the art represented by the above patents.

The system for heating or cooling with a transfer fluid, of the underfloor type, is made with the characteristics substantially described with particular reference to the enclosed claims.

The present invention will be better understood from the following description, given by way of not-limiting example only, and with reference to the accompanying drawings, wherein :
Figure 1 is a perspective view of one basin-like body of a plurality of basin-like bodies of a heating or cooling system according to the invention;
Figure 2 is a top plan view of the system of Figure 1 , according to the invention;
Figure 3 is a side view of the system of Figure 1 , according to the invention;
Figure 4 is a bottom plan view of the system of Figure 1 , according to the invention;
Figure 5 is a perspective view of the system of Figure 1 , in an exemplifying composition of two modular elements;
Figure 6 is a top plan view of the system of Figure 1 , in an exemplifying composition of two modular elements;
Figure 7 is a sectional view of the system shown in Figure 6 , taken along the line VII-VII;
Figure 8 is an enlarged-scale view of a portion of Figure 7 , showing in particular the interface between two modular elements;
Figure 9 is a further perspective view of the system of Figure 1 , in an exemplifying composition of two modular elements;
Figure 10 is a plan view of a modular flooring provided by means of the system of Figure 1 ;

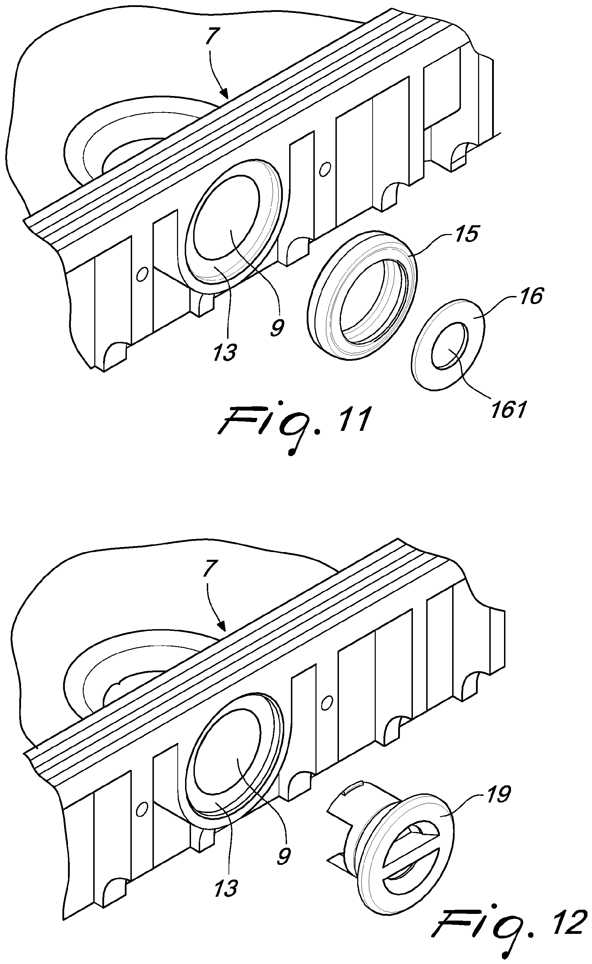

Figures 11 and 12 are perspective views of details of the system of Figure 1 .

With reference to the figures, the system for heating or cooling with a transfer fluid, of the underfloor type, is designated generally by the reference numeral 1.

According to the invention, the system 1 comprises a plurality of basin-like bodies 3, 3' that defines a supporting structure 5 for a substantially flat walkable element 4 and defines a basin 7 for containing a transfer fluid.

The basin-like body 3 comprising a plurality of inlets 9 and a plurality of outlets 11 in order to allow the transfer fluid to enter the basin 7 and exit from the basin 7.

The supporting structure 5 is adapted to support the walkable element 4 so that the walkable element 4 is in direct contact with the transfer fluid contained in the basin 7, in order to heat or cool the walkable element 4.

The walkable element 4, arranged on the supporting structure 5, in fact skims with its own lower face the transfer fluid contained in the basin 7.

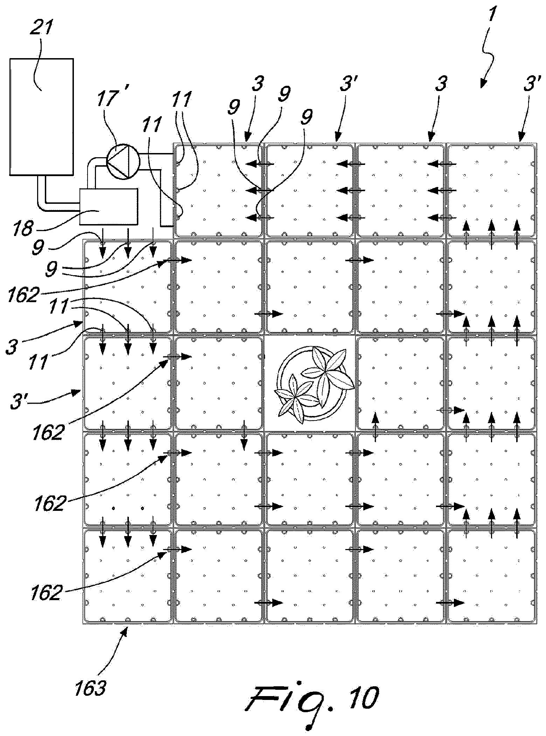

The plurality of basin-like bodies 3, 3' are arranged mutually contiguously, as shown for example in Figure 10 , so that the walkable elements 4 associated with each basin-like body 3, 3' define a modular flooring that can be heated or cooled.

The walkable element 4 is a tile made of one or more materials selected from the group constituted by: gres, granite, marble, glass, metal, ceramics and materials such as plastics.

The inlet 9 and the outlet 11 comprise a seat 13 that is adapted to accommodate, at least partially, a sealing gasket 15.

Inside the sealing gasket 15 it is possible to insert a flow throttling element 16. The throttling element 16 can be constituted by a perforated diaphragm. The size of the diameter of the hole 161 can be selected according to the quantity of flow that one wishes to throttle.

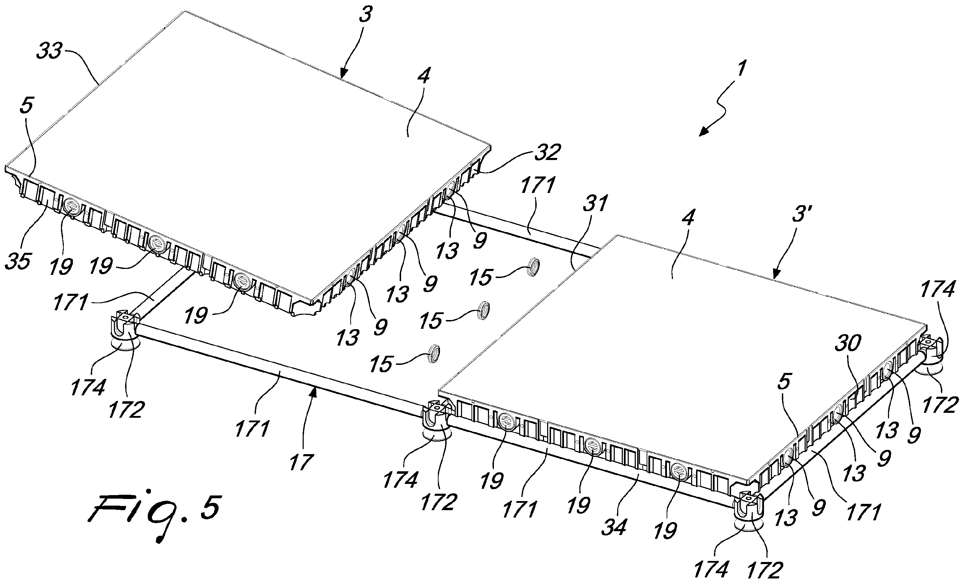

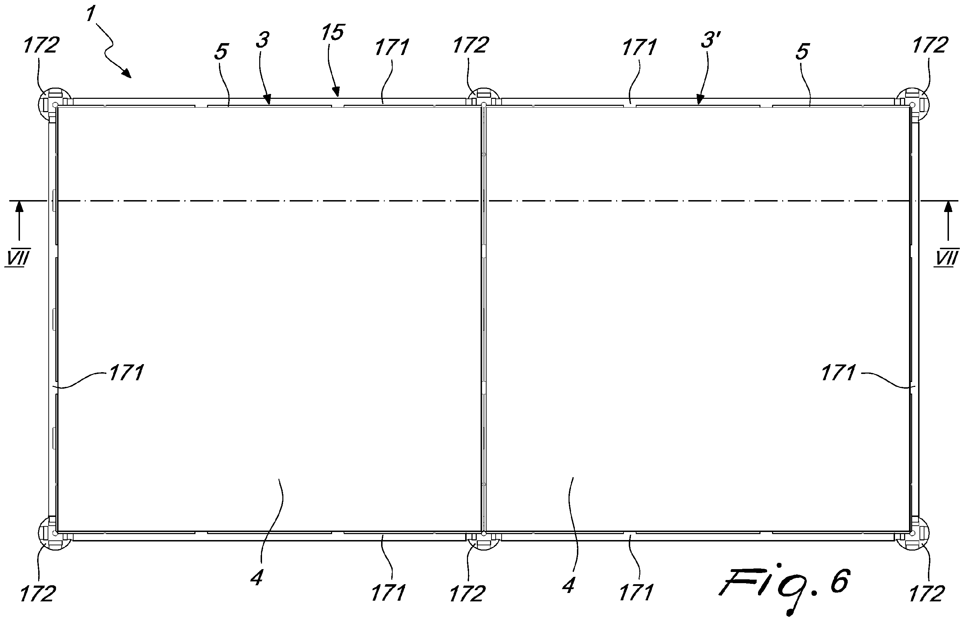

As shown by way of example in Figures 5 to 9 , the basin-like body 3 is advantageously configured so that at least one outlet 11 faces at least one inlet 9 of a contiguous basin-like body 3', so that the basin-like body 3 and the contiguous basin-like body 3' are mutually connected directly or with the interposition only of the sealing gasket 15.

In particular, the system 1 comprises a supporting frame 17 in which it is possible to insert at least two contiguous basin-like bodies 3 e 3', so that the basin-like body 3 arranges at least one inlet 9 so that it faces at least one outlet 11 of the contiguous basin-like body 3'.

The basin-like body 3 comprises a plurality of inlets 9 and outlets 11, which are adapted to be blocked selectively by means of a flow control element 19, so as to define a preferential flow for the transfer fluid within the basin 7.

The inlets 9 and the outlets 11 consist substantially of holes provided in the lateral faces of the basin-like body 3. Depending on the direction of movement of the transfer fluid within a basin 7 and between basins 7 that belong to contiguous basin-like bodies 3', 3, such holes are configured like inlets 9 or outlets 11 for the transfer fluid.

With reference to Figure 5 , the holes present on the lateral face 30 of the basin-like body 3' are configured as inlets 9, while the holes present on the opposite lateral face 31, not visible, are configured as outlets 11. The contiguous basin-like body 3 has, on the lateral face 32, holes configured as inlets 9, which face the outlets 11 of the basin-like body 3' that are present on the lateral face 31 thereof, with the interposition of the sealing gaskets 15. Consistently, the holes present on the opposite lateral face 33 of the basin-like body 3 are configured as outlets 11 for the transfer liquid.

The holes provided in the front faces 34 and 35 respectively of the basin-like bodies 3' and 3 are instead blocked by the presence of the flow control element 19. The flow control element 19 comprises substantially a plug that can be advantageously inserted by snap action in the inlets or in the outlets that one wishes not to be crossed by the transfer fluid. This flow control element 19 can comprises a sealing gasket such as the sealing gasket 15.

The system 1 comprises advantageously a suction pump 17', which can be associated with an open vessel 18, for maintaining a negative pressure inside the basin 7. The negative pressure inside the basin 7 is advantageously adapted to keep the walkable element 4 firmly in contact with the supporting structure 5 of the basin-like body 3. The walkable element 4 can be in fact simply rested on the supporting structure 5.

Preferably, however, the walkable element 4 is inserted by interlocking in the supporting structure 5 of the basin-like body 3.

As an alternative, elastic means, adapted to retain the walkable element 4 inserted in the supporting structure 5, can also be present between the outer lateral edge of the walkable element 4 and the inner lateral edge of the supporting structure 5.

Proximate to the suction pump 17', the circuit through which the transfer fluid flows comprises advantageously a heat exchanger 21 configured for heating or cooling, according to the requirements, the transfer fluid, by bringing it to the desired temperature.

Figure 10 shows an example of modular flooring provided by arranging side by side twenty-three basin-like bodies 3, 3', each one of which supports a walkable element 4. The holes present on the lateral faces of the basin-like bodies 3, 3' that lie along the external perimeter of the modular flooring are conveniently closed by means of the flow control elements 19.

Moreover, in order to determine a desired flow of the transfer fluid within each basin 7, it is possible to select conveniently the number and the placement of the inlets 9 and/or of the outlets 11 to be left open and therefore active. In particular, in Figure 10 the flow of the transfer fluid is designated by arrows, which illustrate through which inlets 9 and outlets 11 of the basin-like bodies 3 and 3' that compose the modular flooring the transfer fluid can flow. The inlets 9 and the outlets 11 that one wishes to close can be simply blocked by means of the flow control element 19. The selection of the inlets 9 and the outlets 11 to be kept opened in order to allow the circulation of the transfer fluid can be such as to ensure homogeneous distribution and circulation of the fluid within the system of communicating basins 7, in order to ensure that dead areas of the transfer fluid are not created.

One or more of the inlets 9 and of the outlets 11 can comprise the flow throttling element 16. By way of example, in Figure 10 the inlets 9 / outlets 11 in which there is a flow throttling element 16 are designated by 162. In particular, the flow throttling elements 16 are arranged in the basin-like bodies 3 and 3' of the heating system 1 that first receive the transfer fluid in input, such as the basin-like bodies 3 and 3' that lie along the column of elements 163. The sum of the flow-rates of the various flow throttling elements 16 present in the heating system 1 is substantially equal to the suction volume of the suction pump 17'.

The surface of the walkable element 4 directly in contact with the transfer fluid is equal to at least 90% of the entire surface of the walkable element 4. In other words, when the walkable element 4 rests on the supporting structure 5 of the basin-like body 3, at least 90%, and preferably at least 95%, of the surface of the lower face of the walkable element 4 skims the transfer fluid that flows within the basin 7 of the basin-like body 3.

Moreover, the system 1 can comprise a screen structure that surrounds at least partially the walkable surface defined by the walkable element 4 or by the plurality of walkable elements 4 that provide the modular flooring.

Such screen structure surrounds preferably the entire perimeter of the modular flooring for a height, with respect to the walkable surface, of approximately 1.5 meters, in order to limit the dispersion of heat and make the system 1 even more thermally efficient.

The supporting frame 17 comprises advantageously a plurality of bars 171 with a substantially circular cross-section, mutually connected by means of resting feet 172.

In the embodiment of the system 1 shown particularly in Figures 5 to 9 , four bars 171, mutually fixed at right angles at the resting feet 172, form two quadrangular structures on which the basin-like bodies 3 and 3' are rested respectively.

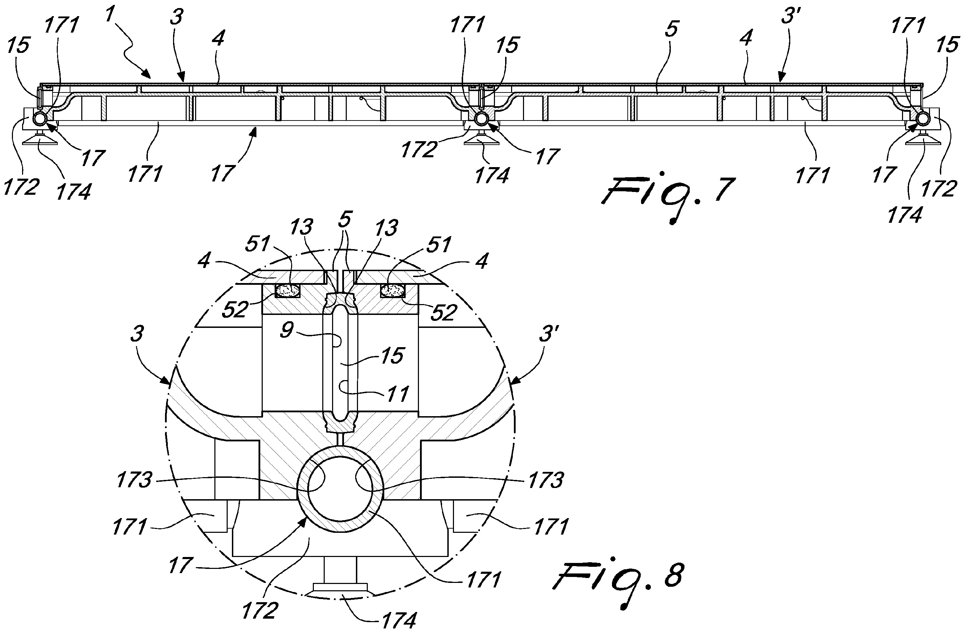

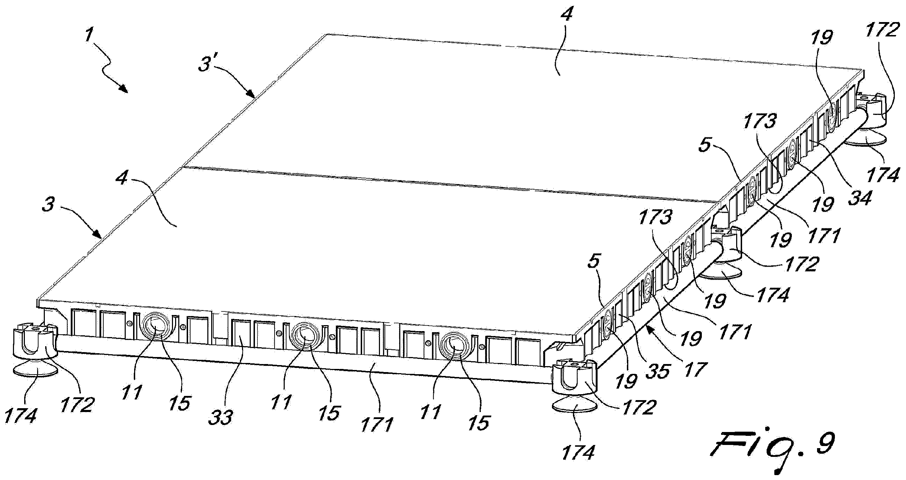

It can be noted from Figures 8 and 9 that the basin-like bodies 3 and 3' comprise, on the lower face, along its entire perimeter, a perimetric bevel 173, which is shaped to abut against the bars 171 of the supporting frame 17. The bevel 173 in fact has a substantially circular shape, adapted to abut against the cylindrical lateral surface of the bars 171. In this manner, the various basin-like bodies 3 and 3' that define the modular flooring can be assembled by interlocking and therefore do not need any type of additional fixing elements, such as screws, bolts or connectors.

Each one of the resting feet 172 can comprise a portion 174 that is adjustable in height, so that the inclination with respect to a horizontal plane of each basin-like body 3, 3', and therefore of the entire modular flooring, is conveniently adjustable in order to ensure that the walkable surface is flat and horizontal.

Moreover, between the walkable element 4 and the supporting structure 5, proximate to the external perimeter of the walkable element 4, there can be a sealing element 51 adapted to ensure that the transfer fluid does not leak from the basin 7. The sealing element 51 can be advantageously accommodated in a seat 52 provided in the supporting structure 5.

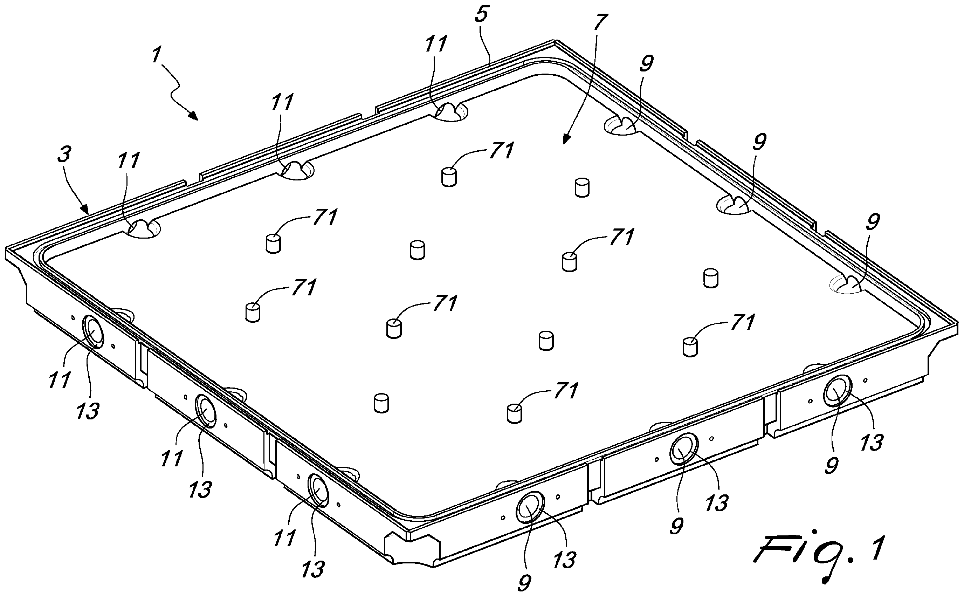

As shown in Figures 1 to 4, the basin-like body 3 comprises a plurality of pins 71 that extend at right angles with respect to the lower plane of the basin 7. The pins 71 contribute to support the walkable element 4, in cooperation with the supporting action provided by the supporting structure 5.

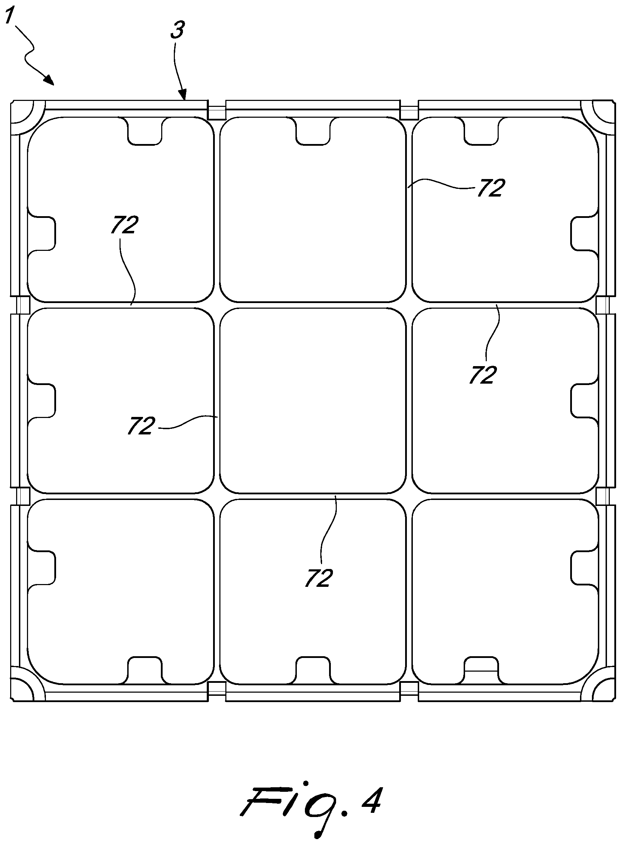

On the lower face of the basin-like body 3, shown in Figure 4 , there can be a plurality of ribs 72 adapted to stiffen the structure of the basin-like body 3.

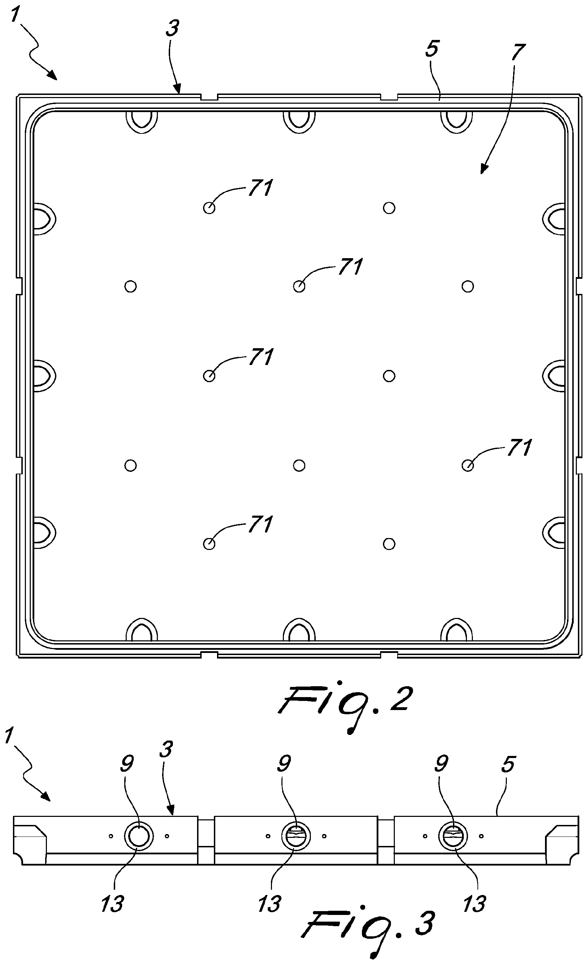

The interspace between the lower plane of the basin 7 and the lower face of the walkable element 4 substantially defines the volume of transfer fluid that is contained in each basin-like body 3, 3'. In particular, as shown in Figure 1 and in Figure 3 , the lower plane of the basin 7 is partially raised with respect to the inlets 9 and the outlets 11, in order to reduce the volume of transfer fluid that flows in each basin-like body 3, 3' and therefore increase the heat exchange rate.

Operation of the heating or cooling system with transfer fluid, of the underfloor type, is clear and evident from what has been described.

The installation of this system comprises the steps of:
providing the supporting frame 17;
arranging the basin-like bodies 3, 3' on the supporting frame 17, using the coupling between the cylindrical shape of the external surface of the bars 171 and the cylindrical shape of the perimetrical bevel 173 that is present on the basin-like bodies 3, 3';
ensuring that the inlets 9 and the outlets 11 of contiguous basin-like bodies 3, 3' face each other by interposition of the sealing gasket 15;
ensuring that the inlets 9 and the outlets 11 of basin-like bodies 3, 3' through which one does not wish the transfer fluid to flow have been blocked by means of the flow control element 19; positioning the walkable elements 4;
optionally adjusting the horizontal inclination and the flatness of the walkable elements 4 by adjusting the height of the resting feet 172;
connecting the suction pump 17', the open vessel 18 and the boiler 21 by means of convenient manifolds to the system 1 obtained according to the previously described steps.

The actuation of the suction pump 17' ensures both the flow of the transfer fluid within the entire system 1 and the retention in position of the walkable elements 4, which are held by negative pressure so as to adhere to the supporting structure 5 of the basin-like bodies 3, 3'.

The operation of the boiler 21 ensures that the transfer fluid is kept at the desired heating temperature.

In practice it has been found that the system for heating or cooling with transfer fluid, of the underfloor type, according to the present invention, achieves the intended aim and objects, since it allows to heat or cool any environment, even an external one, in a safe and efficient manner.

A further advantage of the system, according to the invention, resides in that the air is heated uniformly, since heating occurs upward from below, and therefore by utilizing the natural physical principles of warm air rising, and since the heating system covers substantially the entire walkable surface, as it is not localized in a single point of the environment to be heated.

Another advantage of the system, according to the invention, resides in that it is absolutely not invasive, from the esthetic point of view, since it is constituted simply by the flooring proper.

A further advantage of the system, according to the invention, resides in that it does not entail any type of risk for the user, since open sources of heat are not present.

Another advantage of the system, according to the invention, resides in that it is modular and allows therefore to cover surfaces having different shapes and floor areas, ensuring in any case an optimum and uniform distribution of the transfer fluid.

A further advantage resides in that the system, according to the invention, does not need a distribution manifold.

Another advantage resides in that the system is easy to level, once installed, is easy to disassemble, without demolition interventions, and is also easily reusable.

The system for heating or cooling with transfer fluid, of the underfloor type, thus conceived is susceptible of numerous modifications and variations, all of which are within the scope of the appended claim, solely defining the invention.

All the details may further be replaced with other technically equivalent elements.

In practice, the materials used, so long as they are compatible with the specific use, as well as the contingent shapes and dimensions, may be any according to requirements.

Where technical features mentioned in any claim are followed by reference numerals and/or signs, those reference numerals and/or signs have been included for the sole purpose of increasing the intelligibility of the claims and accordingly such reference numerals and/or signs do not have any limiting effect on the interpretation of each element identified by way of example by such reference numerals and/or signs.

## Claims

1. A system (1) for heating or cooling with a transfer fluid, of the underfloor type, particularly adapted for outdoor environments, comprising a plurality of basin-like bodies (3) and contiguous basin-like bodies (3') defining basins (7) for containing a transfer fluid, that can be heated or cooled, said basin-like bodies (3, 3') defining a supporting structure (5) being adapted to support a flat walkable element (4) so that said walkable element (4) is in direct contact with said heat transfer fluid contained in said basin (7), said walkable element (4) defining a modular flooring constituted by a tile made of one or more materials selected from the group constituted by : gres, granite, marble, glass, metal, ceramics and plastics, said system (1) for heating comprising a supporting frame (17) adjustable in height and adapted to support said basin-like bodies (3, 3', said basin-like bodies (3,3') provided with a plurality of pins (71) extended at right angles with respect to the lower plane of the basin (7), and supporting the walkable element (4) in cooperation with the supporting action provided by said supporting structure (5), which walkable element (4) skims with its own lower face the transfer fluid contained into the basin (7), for heating or cooling the same walkable element; each basin-like body (3) comprising a plurality of inlets (9) and outlets (11) consisting of holes provided in the lateral faces of the basin-like body (3) and each basin-like body (3') comprising a plurality of inlets (9) and outlets (11) consisting of holes provided in the lateral faces (30) and the opposite lateral faces (31) of the basin-like body (3'), and comprising a suction pump (17') which can be associated to an open vessel (18) for maintaining a negative pressure inside the basin (7), adapted to keep the walkable element (4) firmly into contact with said supporting structure (5), and also comprising a heat exchanger (21) in the circuit through which the transfer fluid flows, which is configured for heating or cooling the transfer fluid by bringing it to the desired temperature, wherein each basin-like body (3) is so configured that at least one outlet (11) faces at least one inlet (9) of a contiguous basin-like body (3'), so that the basin-like body (3) and the contiguous basin-like body (3') are mutually connected directly or with the interposition only of a sealing gasket (15), which is accommodated into a seat (13), comprised in the inlet (9) and the outlet (11), and inside said sealing gasket (15) it is possible to insert a flow throttling element (16), which can be constituted by a perforated diaphragm, for throttling the quantity of flow that one wishes, wherein in order to determine a desired flow of the transfer fluid within each basin (7), the number and the placement of the inlets (9) and the outlets (11) of the basin -like bodies (3, 3') to be left open is selectable, and the inlets (9) and outlets (11) that one wishes to close are configured to be blocked selectively by means of a flow control element (19), comprising a plug configured to be inserted by snap action in the inlets (9) or in the outlets (11) that one wishes not to be crossed by the transfer fluid, so as to define a preferential flow for the transfer fluid within the basin (7) of the body (3') and the contiguous body (3), and wherein depending on the direction of movement of the transfer fluid within a basin (7) and between basins (7) that belong to contiguous basin-like bodies (3, 3'), such holes are configured like inlets (9) or outlets (11) for the transfer fluid.

## Patentansprüche

1. System (1) des Unterbodentyps zum Heizen oder Kühlen mit einer Transferflüssigkeit, insbesondere angepasst an die Außenumgebung, welches eine Mehrzahl von beckenähnlichen Körpern (3) und angrenzenden beckenähnlichen Körpern (3') umfasst, welche Becken (7) bilden, die eine Transferflüssigkeit enthalten, die erhitzt oder gekühlt werden kann, und wobei die beckenähnlichen Körper (3, 3') einen Trägeraufbau (5) bilden, der so angepasst ist, dass er ein flaches begehbares Element (4) tragen kann, so dass das begehbare Element (4) in direktem Kontakt mit der in dem Becken (7) enthaltenen Wärmetransferflüssigkeit steht, wobei das begehbare Element (4) Folgendes bildet:
einen modularen Bodenbelag, der aus einer aus Platte hergestellt ist, die aus einem oder mehreren Materialien besteht, die aus der folgenden Gruppe gewählt sind: gres (Steinzeug), Granit, Marmor, Glas, Metall, Keramik und Kunststoff,
wobei das Heizsystem (1) einen Trägerrahmen (17) aufweist, der höhenverstellbar und so ausgebildet ist, dass er die beckenähnlichen Körper (3, 3') trägt,
wobei die beckenähnlichen Körper (3, 3') mit einer Mehrzahl von Stiften (71) ausgebildet sind, die sich im rechten Winkel zur unteren Ebene des Beckens (7) erstrecken und das begehbare Element (4), gemeinsam mit dem Trägeraufbau (5), tragen,
wobei das begehbare Element (4) mit seiner eigenen Unterseite die im Becken (7) enthaltene Transferflüssigkeit zum Erhitzen oder Kühlen des begehbaren Elements zurückhält,
wobei jeder beckenähnliche Körper (3) eine Mehrzahl von aus Einlässen (9) und Auslässen (11) bestehenden Löchern umfasst, die in den Seitenflächen der beckenähnlichen Körper (3) ausgebildet sind, und
jeder beckenähnliche Körper (3') eine Mehrzahl von Einlässen (9) und Auslässen (11) umfasst, die aus Löchern bestehen, die in den Seitenflächen (30) und in den gegenüberliegenden Seitenflächen (31) des beckenähnlichen Körpers (3') ausgebildet sind,
und eine Saugpumpe (17') umfasst, die an einen offenen Behälter (18) angeschlossen werden kann, um in dem Becken (7) einen Unterdruck beizubehalten,
um das begehbare Element (4) fest im Kontakt mit dem Trägeraufbau (5) zu halten, und auch umfassend einen Wärmetauscher (21) in dem Kreislauf, durch den die Transferflüssigkeit fließt, welcher zum Heizen oder Kühlen der Transferflüssigkeit konfiguriert ist, um diese auf die gewünschte Temperatur zu bringen,
wobei jeder beckenähnliche Körper (3) so ausgebildet ist, dass wenigstens ein Auslass (11) wenigstens einem Einlass (9) eines angrenzenden beckenähnlichen Körpers (3') gegenüberliegt, so dass der beckenähnliche Körper (3) und der angrenzende beckenähnliche Körper (3') direkt miteinander oder über die Zwischenschaltung lediglich einer Dichtung (15) verbunden sind, die in einer in dem Einlass (9) und dem Auslass (9) ausgebildeten angepassten Aufnahme eingesetzt ist, und
es in der Dichtung (15) möglich ist, ein Drosselelement (16) einzufügen, welches z.B. eine perforierte Membran sein kann, zum Drosseln der gewünschten Strömung, wobei, um den gewünschten Fluss der Transferflüssigkeit in jedem Becken (7) zu bestimmen, die Anzahl und Platzierung der offen zu lassenden Einlässe (9) und Auslässe (11) wählbar ist, und die Einlässe (9) und Auslässe (11), die geschlossen werden sollen, so ausgebildet sind, dass sie wahlweise mit Hilfe eines Strömungssteuerelements (19) blockiert werden können, welches einen Stopfen umfasst, der in die Einlässe (9) oder Auslässe (11) einrasten kann, durch die die Transferflüssigkeit nicht geführt werden soll, um so eine bevorzugte Strömung für die Transferflüssigkeit in dem Becken (7) des Körpers (3') und des angrenzenden Körpers (3) zu bilden,
und wobei, abhängig von der Bewegungsrichtung der Transferflüssigkeit innerhalb eines Beckens (7) und zwischen Becken (7), die zu den angrenzenden beckenähnlichen Körpern (3, 3') gehören, solche Löcher wie Einlässe (9) oder Auslässe (11) für die Transferflüssigkeit konfiguriert werden.

## Revendications

1. Système (1) de chauffage ou de refroidissement avec un fluide de transfert, du type sous plancher, adapté en particulier à des environnements extérieurs, comprenant une pluralité de corps similaires à un bac (3) et des corps similaires à un bac contigus (3') qui définissent des bacs (7) destinés à contenir un fluide de transfert, qui peut être chauffé ou refroidi, lesdits corps similaires à un bac (3, 3') définissant une structure porteuse (5) adaptée au support d'un élément plat sur lequel on peut marcher (4) de sorte que ledit élément sur lequel on peut marcher (4) soit en contact direct avec ledit fluide de transfert de chaleur contenu dans ledit bac (7), ledit élément sur lequel on peut marcher (4) définissant un plancher modulaire constitué par une dalle réalisée dans un ou plusieurs matériaux sélectionnés dans le groupe constitué par : le grès, le granit, le marbre, le verre, le métal, la céramique et la matière plastique, ledit système (1) de chauffage comprenant un cadre porteur (17) qui peut être réglé en hauteur et qui est adapté au support desdits corps similaires à un bac (3, 3'), lesdits corps similaires à un bac (3, 3') étant dotés d'une pluralité de broches (71) qui s'étendent perpendiculairement par rapport au plan inférieur du bac (7), et qui supportent l'élément sur lequel on peut marcher (4) en coopération avec l'action de support fournie par ladite structure porteuse (5), lequel élément sur lequel on peut marcher (4) frôle avec sa propre face inférieure le fluide de transfert contenu dans le bac (7), pour chauffer ou refroidir le même élément sur lequel on peut marcher ;
chaque corps similaire à un bac (3) comprenant une pluralité d'entrées (9) et de sorties (11) constituées de trous prévus dans les faces latérales du corps similaire à un bac (3), et chaque corps similaire à un bac (3') comprenant une pluralité d'entrées (9) et de sorties (11) constituées de trous prévus dans les faces latérales (30) et dans les faces latérales opposées (31) du corps similaire à un bac (3'), et comprenant une pompe aspirante (17') qui peut être associée à un contenant ouvert (18) pour maintenir une pression négative à l'intérieur du bassin (7), adaptée pour garder l'élément sur lequel on peut marcher (4) fermement en contact avec ladite structure porteuse (5), et comprenant également un échangeur de chaleur (21) dans le circuit à travers lequel circule le fluide de transfert, qui est configuré pour chauffer ou refroidir le fluide de transfert en l'amenant à la température souhaitée,
dans lequel chaque corps similaire à un bac (3) est ainsi configuré de sorte qu'une sortie (11) au moins fasse face à une entrée (9) au moins d'un corps similaire à un bac contigu (3'), de sorte que le corps similaire à un bac (3) et le corps similaire à un bac contigu (3') soient mutuellement connectés directement ou en interposant seulement une garniture d'étanchéité (15), qui est reçue dans un siège (13), compris dans l'entrée (9) et la sortie (11), et à l'intérieur de ladite garniture d'étanchéité (15) il est possible d'insérer un élément de régulation du flux (16), qui peut être constitué par un diaphragme perforé, pour réguler la quantité de flux que l'on souhaite ;
dans lequel, afin de déterminer un flux souhaité de fluide de transfert dans chaque bac (7), il est possible de sélectionner le nombre et le placement des entrées (9) et des sorties (11) des corps similaires à un bac (3, 3') à laisser ouvertes, et les entrées (9) et les sorties (11) que l'on souhaite fermer sont configurées de façon à être bloquées sélectivement au moyen d'un élément de commande de flux (19), comprenant un bouchon configuré pour être inséré par action rapide dans les entrées (9) ou dans les sorties (11) que l'on souhaite ne pas être traversées par le fluide de transfert, afin de définir un flux préférentiel du fluide de transfert dans le bac (7) du corps (3) et du corps contigu (3'), et
dans lequel, selon la direction du déplacement du fluide de transfert dans un bac (7) et entre les bacs (7) qui appartiennent à des corps similaires un bac contigus (3, 3'), de telle sorte que les trous soient configurés en tant qu'entrées (9) ou sorties (11) du fluide de transfert.
